# EUROPEAN PATENT APPLICATION

(11) **EP 0 840 030 A2**
(43) Date of publication of application: **06.05.1998**
(21) Application number: 97118916.2
(22) Date of filing: 30.10.1997
(51) Int. Cl.: F16F 1/12

(54) **Remote preloading adjustment device for a shock-absorber spring**

(30) Priority: 04.11.1996 IT BO960558
(71) Applicant: PAIOLI S.p.A., 40019 S. Agata Bolognese (Bologna) (IT)
(72) Inventor: Gnudi, Andrea, 40138 Bologna (IT)
(74) Representative: Modiano, Guido, Dr.-Ing.

(57) **Abstract**

A remote preloading adjustment device for shock-absorber spring, in which the spring (M) is coupled frontally, at one of its ends, against the plate (P) of a rotating plate/fixed counterplate assembly (C) provided with corresponding helical seats (4,8a-c) for rolling coupling means (6,9), the plate (P) and the counterplate (C) being mutually associated by relative rotation means (10) whose actuation compresses the spring (M), return of the plate (P) and counterplate (C) to the original angular configuration occurring spontaneously under the thrust of the spring (M).

## Description

The present invention relates to a remote preloading adjustment device for a shock-absorber spring.

In the particular field of sports, racing or off-the-road motorcycles, shock-absorbers are required to react differently according to the stresses to which they are subjected: in particular, the driver would like to be able to control the hardness of the shock-absorber depending on the load on the motorcycle, on the conditions of the road, and on the driving speed he intends to keep: as regards the fluid-actuated component of the shock-absorber, it is easy to intervene with oil flow valves having an adjustable aperture, whilst as regards the hardness of the spring, i.e., the adjustment of its preloading, the devices that have been adopted so far are rather inadequate.

Manual setting of the preloading, in addition to forcing one to stop the vehicle to perform it, in fact entails intervening on components which are difficult to access; accordingly, in such cases the interventions are performed in a workshop before the start: in other cases, instead, the resting point of the spring is a part of a hydraulic circuit which is preset for this purpose and can move longitudinally to the shock-absorber, but this entails considerable costs, also in relation to the fact that in view of the intense friction involved it is necessary to provide rather powerful and accordingly expensive motorization systems, pumps or the like.

The aim of the present invention is to obviate the above drawbacks of conventional devices, i.e., to provide a remote preloading adjustment device for a shock-absorber spring which allows to adjust the spring while the vehicle is moving and which does not entail particularly powerful motorization systems since the friction involved is modest.

Within the scope of this aim, an object of the present invention is to provide a device which is simple, relatively easy to provide in practice, safe in use, effective in operation and has a relatively low cost.

This aim, these objects and others which will become apparent hereinafter are achieved by the present remote preloading adjustment device for shock-absorber spring, characterized in that the spring is coupled frontally, at one of its ends, against the plate of a rotating plate/fixed counterplate assembly provided with corresponding helical seats for rolling coupling means, and in that said plate and said counterplate are mutually associated by relative rotation means whose actuation compresses the spring, return of the plate and counterplate to the original angular configuration occurring spontaneously under the thrust of the spring.

Further characteristics and advantages of the present invention will become apparent from the following detailed description of a preferred but not exclusive embodiment of a remote preloading adjustment device for a shock-absorber spring M according to the present invention, illustrated only by way of non-limitative example in the accompanying drawings, wherein:

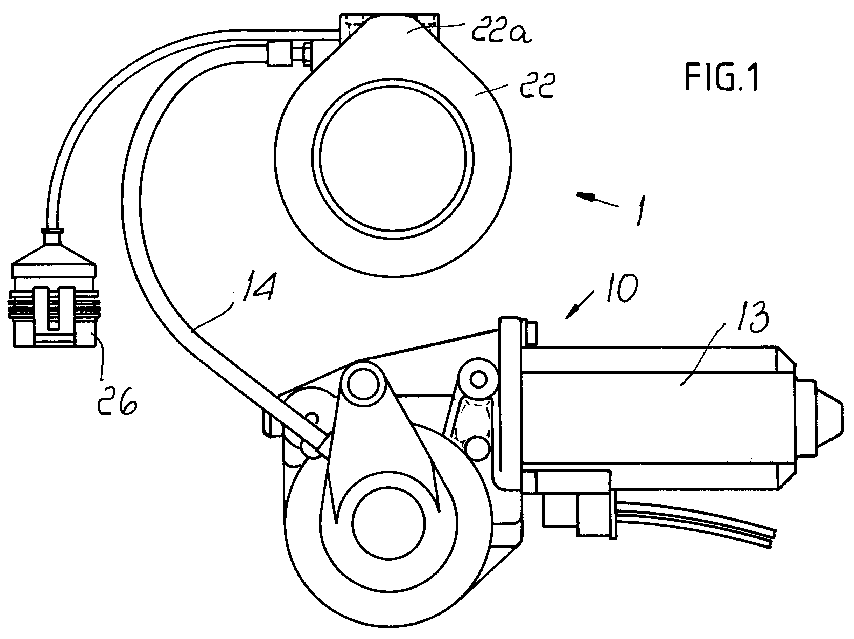

figure 1 is a general view of a remote preloading adjustment device for a shock-absorber spring M;
figure 2 is a sectional side view, taken along a diametrical plane, of the plate-counterplate of the device of figure 1;
figure 3 is a sectional side view, taken along a diametrical plane, of a second embodiment of the plate and counterplate of figure 2;

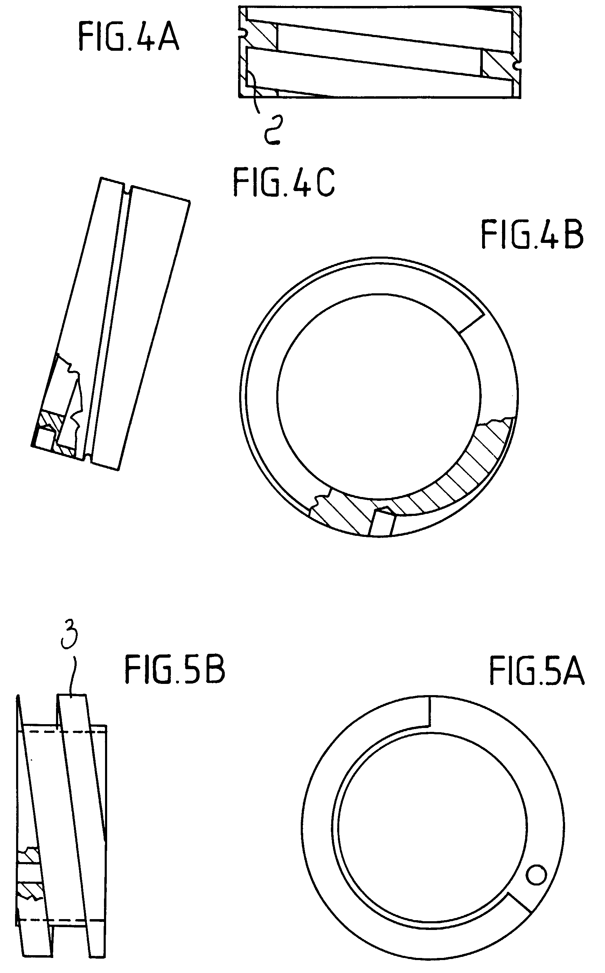

figures 4a, 4b and 4c are sectional views, taken along a diametrical plane, of a component of the plate and counterplate of figure 2;

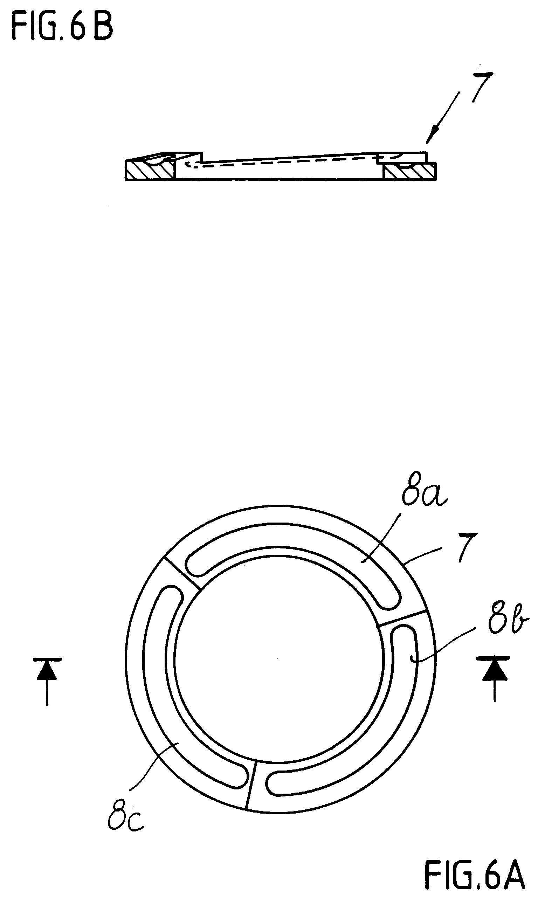

figures 5a and 5b are partially cutout views of another component of the plate and counterplate of figure 2;
figures 6a and 6b are views of a component of the plate and counterplate of figure 3, the second view being taken sectionally along a diametrical plane.

With particular reference to the above figures, the reference numeral 1 generally designates a remote preloading adjustment device for a shock-absorber spring M, according to the present invention.

In the device 1 substantially the spring is frontally coupled, at one of its ends, against the plate P of a rotating plate/fixed counterplate assembly C, provided with corresponding helical seats for rolling coupling means.

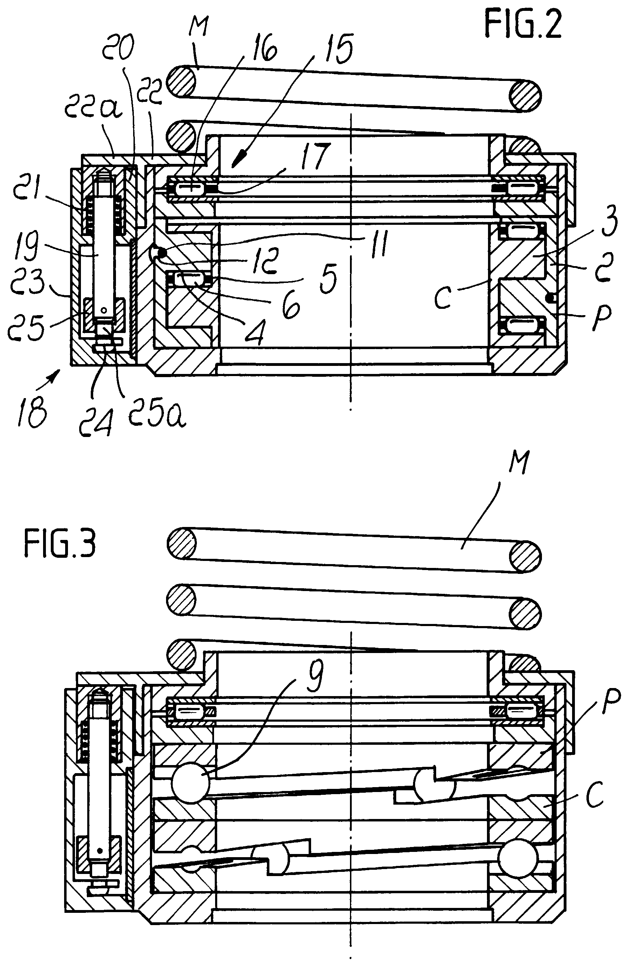

In an intended embodiment, shown in figure 2, a female thread 2 and a male thread 3 are formed in the thickness of the plate and in the thickness of the counterplate respectively; said threads have coupling profiles provided with a rectangular cross-section and are mutually coupled, and a seat 4 for fitting a helical cage 5 for guiding a plurality of cylindrical rollers 6 is formed between said threads.

In an alternative embodiment, the seats are formed on the opposite faces 7 of the plate and of the counterplate and each one is constituted by at least three recesses 8a, 8b, 8c distributed on the facing surfaces; the recesses 8a-c have decreasing depths and respective rolling balls 9 or the like are arranged therein; conveniently, in order to avoid malfunctions in case of slippage of the rolling components, the coupling surfaces of the recesses and of the balls are provided with teeth.

In order to increase the compression stroke of the spring, two plate and counterplate pairs are installed (see figure 3): it is noted that the plates and counterplates are constituted by mutually identical components whose surfaces 7 face each other.

The plate and the counterplate are mutually associated by relative rotation means 10 whose actuation compresses the spring: said means are of the type with a cable 11 which is wound in an annular perimetric groove 12 of the plate and is actuated by an electric gearmotor 13 by means of a coupling provided by a sheathed cable 14; conveniently, the motorization unit used is of the low-voltage, low-power compact type, for example such as those used for power windows of vehicles.

A thrust bearing 15 with cylindrical rollers 16 installed in a cage 17 is fitted between the spring of the shock-absorber and the plate.

The return of the plate and of the counterplate to the initial angular configuration occurs spontaneously under the thrust of the spring when the cable 11 is released.

A relative distance detector 18 is installed between the plate and the counterplate and comprises a stem 19 which is screwed to a cylinder 20 which is pushed upwards by a helical compression spring 21: the radial tab 22a of a disk 22 rests on the cylinder and the spring M rests thereon: the cylinder can move with respect to a cylindrical guide 23 arranged laterally to the plate and a magnetic detector 24 is embedded at the base of the guide and cooperates with a small magnet 25a which is fixed to the base of the stem 19 by means of a support 25: the detector 24 is connected, by means of a connector 26, to a dial which is suitable to indicate the preloading status of the spring and can optionally drive the electric motor 13 by means of a controller.

Operation of the device is self-evident: actuation of the electric motor 13 in one direction pulls the cable and produces the relative rotation of the plate and counterplate and the sliding of the plate and counterplate away from each other (compression of the spring): actuation of the motor in the opposite direction releases the cable and produces the spontaneous return of the plate and counterplate to a mutually close position under the action of the spring (spring expansion).

It has thus been shown that the invention achieves the intended aim and objects and in particular that it provides a remote preloading adjustment device for a shock-absorber spring which allows to adjust the spring while the vehicle is moving and which, since the friction involved is modest owing to the rolling coupling means, does not entail particularly powerful motorization systems and has a spontaneous return action.

The invention thus conceived is susceptible of numerous modifications and variations, all of which are within the scope of the inventive concept.

All the details may be replaced with other technically equivalent elements.

In practice, the materials employed, as well as the shapes and the dimensions, may be any according to the requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A remote preloading adjustment device for shock-absorber spring, characterized in that the spring (M) is coupled frontally, at one of its ends, against the plate (P) of a rotating plate/fixed counterplate assembly (C) provided with corresponding helical seats (4,8a-c)for rolling coupling means (6,9), and in that said plate (P) and said counterplate (C) are mutually associated by relative rotation means (10) whose actuation compresses the spring (M), return of the plate (P) and counterplate (C) to the original angular configuration occurring spontaneously under the thrust of the spring (M).

2. A device according to claim 1, characterized in that said plate (P) and counterplate (C) have a seat (2) which is shaped like a female thread and a seat (3) shaped like a male thread, said seats having a rectangular sectional profile, a cage (5) for guiding a plurality of cylindrical rollers (6) being fitted between said seats (2,3).

3. A device according to claim 1 and as an alternative to claim 2, characterized in that each one of said seats of said plate (P) and counterplate (C) is constituted by at least three recesses (8a-c) which are distributed on the facing surfaces (7), gradually decrease in depth, and contain rolling balls (9) or the like.

4. A device according to claim 3, characterized in that the coupling surfaces (7) of said recesses (8a-c) and of said balls (9) are toothed.

5. A device according to claim 1, characterized in that said relative rotation means are of the type with a cable (11) which is wound in an annular groove (12) the plate (P) and actuated by an electric gearmotor (13) through a sheathed-cable coupling (14).

6. A device according to claims 1 and 5, characterized in that a relative distance detector (18) is fitted between said plate (P) and said counterplate (C) and is suitable to indicate the preloading condition of said spring (M) and to drive said electric motor (13) by means of a controller.

7. A device according to claim 1, characterized in that a thrust bearing (15) is fitted between said spring (M) of the shock-absorber and said plate (P).
